# EUROPEAN PATENT APPLICATION

(11) **EP 3 995 448 A1**
(43) Date of publication of application: **11.05.2022**
(21) Application number: 20205796.4
(22) Date of filing: 04.11.2020
(51) Int. Cl.: C01B 33/38, C01B 37/00, C01B 37/02, C08K 3/016, C08K 3/36, C09C 1/00, C11D 3/12

(54) **PROCESS FOR DELAMINATION OF LAYERED ZEOLITE, A DELAMINATED LAYERED ZEOLITE DISPERSION AND USE THEREOF**

(71) Applicant: Breu, Josef, 95448 Bayreuth (DE); Loch, Patrick, 95447 Bayreuth (DE)
(72) Inventor: Breu, Josef, 95448 Bayreuth (DE); Loch, Patrick, 95447 Bayreuth (DE)
(74) Representative: Maiwald Patent- und Rechtsanwaltsgesellschaft mbH

(57) **Abstract**

The present invention refers to a process for delamination of a layered zeolite in an aqueous medium, comprising the steps of (a) providing a layered zeolite, (b) providing a delamination agent, (c) contacting the layered zeolite with the delamination agent and (d) contacting the treated layered zeolite with an aqueous medium. to obtain a delaminated layered zeolite dispersion, wherein the delaminated layered zeolite has an aspect ratio of at least 200. Furthermore, a delaminated layered zeolite dispersion is disclosed, wherein the delaminated layered zeolite has an aspect ratio of at least 200 as well as the use thereof and a composition comprising such a dispersion.

## Description

The present invention refers to a process for delamination of a layered zeolite in an aqueous medium, comprising the steps of (a) providing a layered zeolite, (b) providing a delamination agent, (c) contacting the layered zeolite with the delamination agent and (d) contacting the treated layered zeolite with an aqueous medium, to obtain a delaminated layered zeolite dispersion, wherein the delaminated layered zeolite has an aspect ratio of at least 200. Furthermore, a delaminated layered zeolite dispersion is disclosed, wherein the delaminated layered zeolite has an aspect ratio of at least 200 as well as the use thereof and a composition comprising such a dispersion.

Zeolites are microporous, silicate minerals which are known in the prior art and are used in several applications such as adsorbents or catalysts. Zeolites can occur naturally or can be produced synthetically. Especially layered zeolites, a family of microporous crystalline materials that are viewed as covalently bonded continuous frameworks extended in only two dimensions are of great interest. Layered zeolites are often added to surface-coating compositions or composite materials or membrane materials. The mechanical properties of the resulting systems can be improved thereby. In particular, it is possible in that manner to increase the barrier action of a surface-coating or composite material layer or membrane material.

However, it is known in the prior art that the degree of improvement in the properties of the surface-coating compositions or composite materials or membrane materials depends significantly on the aspect ratio and the uniformity of layer thickness of the layered zeolites. In principle, the higher the aspect ratio and the better the uniformity of the layered zeolites the better the properties, especially the mechanical properties and the barrier properties. Therefore, it is accordingly desirable in principle to produce layered zeolite platelets having a high aspect ratio and uniform layer thickness, because therewith it is possible to obtain surface-coatings, membranes or composite material layers which are distinguished by particularly good mechanical properties and a high and/or selective barrier actions. The aspect ratio in the meaning of the present invention is defined as being the quotient of the platelet length of the layered zeolite and the height of the platelet of the layered zeolite. Consequently, both an increase in the platelet length and a reduction in the platelet height brings about an increase in the aspect ratio.

In general, layered zeolites are aluminum-free two-dimensional (2-D) oriented condensed structures that have stacks of silicate lamellae, so-called tactoids, with heights of from several nanometers to a few millimeters. The theoretical lower limit of the platelet height of layered zeolites is a single silicate lamella, which is about one nanometer.

The aspect ratio of layered silicates can either be maximized by maximizing the diameter of the platelet or by minimizing its height, or both. While the diameter of individual lamellae highly depends on the type of layered zeolite, the height of a single silicate lamella is rather constant and about one nanometer as stated above. Therefore, it should always be the aim to minimize the height of platelet, to obtain individual silicate lamellae by delamination.

However, the terms "delamination" and "exfoliation", with respect to the degree of separating layers of a layered zeolite are not used in a consistent manner in the literature. According to the present invention, the term "delamination" refers to separating the layers of a layered zeolite mainly into individual silicate lamellae, or into lamellae batches of only few lamellae. More precisely, "delamination" according to the present invention refers to separating at least 70% more preferably at least 80 % and most preferably at least 90 % of the number of layers of a layered zeolite into individual silicate lamellae or into lamellae batches of up to 20, preferably up to 15 and more preferably up to 10 silicate lamellae. The term "exfoliation" refers to the separation of layers mainly in stacks of silicate lamellae comprising more than 20 silicate lamellae.

Increasing the aspect ratio of different materials, and especially exfoliating such materials is known in the prior art. Reference is made to the articles by H. A. Stretz, D. R. Paul, R. Li, H. Keskkula, P. E. Cassidy, Polymer 2005, 46, 2621-2637 and L. A. Utracki, M. Sepehr, E. Boccaleri, Polymers for Advanced Technologies 2007, 18, 1-37. However, the known prior art does normally not refer to layered zeolites but to different compounds, for example, layered silicates or clay minerals. Since these materials are different due to their chemical/crystal structure and their layer charge, the techniques known for these materials cannot be transferred to increasing the aspect ratio of layered zeolites.

However, exfoliation of layered zeolites has also been described in the prior art.

Roth et al., Science Advances, 2020, 6, "Liquid dispersions of zeolite monolayers with high catalytic activity prepared by soft-chemical exfoliation" refers to the exfoliation of layered zeolites in dispersions. However, for exfoliation a tetrabutylammonium hydroxide solution (TBAH) is used, which is a non-polar compound and, therefore limiting the dispersability in hydrophilic/biodegradable polymer matrices like PVOH and PEG.

Osada et al. Chemical Letters, 2013, 42, 80-82, refers to the exfoliation with didecyldimethylammonium ions. However, with this exfoliation agent it is not possible to exfoliate in water but only in non-aqueous solvents such as pentane.

Furthermore, exfoliation of such materials was also described by Takahasi N. et al., in Chem. Mater., 2011, 23, 266-273 and by Ide Yusuke et al., in Langmuir, 2009, 25(9), 5276-5281. In these documents (3-mercaptopropyl)trimethoxysilane has been used as exfoliation agent. However, with this exfoliating agent a surface modification by silylation of the surface of the layered zeolite occurs concomitantly which leads to chemically modified layers after exfoliation.

Therefore, there is a need for the provision of an improved process for the delamination of layered zeolites that leads to high aspect ratios. Especially, there is a need to provide a process that uses universal delamination agents, which successfully delaminate different layered zeolites. Furthermore, it is desirable, that the process for the delamination does not lead to chemically modified layers even after delamination. It is also desirable that the process can be performed easily, is cheap and environmentally friendly, for example water-born.

These and other objectives of the present invention can be solved by the inventive process for delamination of a layered zeolite.

According to one embodiment of the present invention a process for delamination of a layered zeolite in an aqueous medium is provided, the process comprising the steps of
(a) providing a layered zeolite,
(b) providing a delamination agent, wherein the delamination agent is characterized in that it
   (i) is a compound having exactly one positively charged atom, the positively charged atom being selected from the group consisting of nitrogen and phosphorous, and
   (ii) contains nffunctional groups selected from the group consisting of hydroxyl groups, ether groups, sulfonic acid ester groups, carboxylic acid ester groups and mixtures thereof, n_{f} being a number from 3 to 10, and
   (iii) comprises a total number of carbon atoms n_{c} being from 4 to 12, and
   (iv) has a ratio of n_{c}/(1 +nf) from 1 to 2, wherein n_{c} is the total number of carbon atoms of the delamination agent as defined under (iii) and n_{f} is the total number of functional groups in the delamination agent as defined under (ii), and
   (v) contains nₜ atoms selected from the group consisting of carbon, nitrogen, phosphorous, oxygen, sulfur and mixtures thereof, nₜ being 9 to 40, and
   (vii) has a pKₐ ≥ 7,
(c) contacting the layered zeolite with the delamination agent to obtain a treated layered zeolite, wherein the amount of the delamination agent is at least 60% of the cation exchange capacity of the layered zeolite,
(d) contacting the treated layered zeolite with an aqueous medium to obtain a delaminated layered zeolite dispersion, wherein the delaminated layered zeolite has an aspect ratio of at least 200.

The inventors surprisingly found that the foregoing process provides delaminated layered zeolites with an aspect ratio of at least 200. More precisely, the inventors surprisingly found that the delaminating agents according to the present invention can be used to delaminate different layered zeolites and preferably an uniform layer thickness is obtained. Furthermore, the inventive process for the delamination does not lead to chemically modified layers even after delamination and, therefore, the originally characteristics of the single lamellae remain unchanged. Additionally, the present delaminating agents are polar and, therefore, water-soluble. Thus the inventive process can be performed in an aqueous medium, which is a cheap and environmentally friendly solvent. Furthermore, the compounds used in the inventive process, namely the layered zeolite and the delaminating agent are non-toxic to humans and do not provide a harmful effect on the environment. Additionally, the inventors surprisingly found that the process of the present invention can be easily and quickly performed, is cheap, scalable and especially easy to handle. Moreover, it is water-born and atom efficient and therefore environmental friendly.

According to another aspect of the present invention, a delaminated layered zeolite dispersion, comprising below 35 wt.-% of layered zeolite based on the total weight of the dispersion, wherein the delaminated layered zeolite has an aspect ratio of at least 200 is provided.

According to another aspect of the present invention the inventive delaminated layered zeolite dispersion is used in the production of a composite material, a coating material, as a membrane material, or as a flameproof barrier or as a diffusion barrier and, preferably as a membrane material.

According to another aspect of the present invention a composition selected from the group consisting of coating materials, composite materials and membrane materials, is provided comprising the inventive delaminated layered zeolite dispersion.

Advantageous embodiments of the above aspects are defined in the corresponding subclaims.

According to one embodiment of the present invention, the layered zeolite is represented by general formula (I)

(M₂O)ₙ(SiO₂)ₘ·(H₂O)ₓ

wherein M are alkali metals, n is from 0.5 to 10, m is from 1 to 25, and x is from 1 to 25. According to another embodiment of the present invention M is Li, Na or K and preferably Na, n is from 1 to 5, preferably 1 to 3, m is from 1 to 15, preferably 1 to 12 and x is from 1 to 15, preferably from 1 to 12.

According to another embodiment of the present invention the layered zeolite is ilerite, magadiite, kanemite, makatite or kenyaite and preferably ilerite and/or the layered zeolite consists of individual crystals.

According to another embodiment of the present invention, the delamination agent
(i) is a compound having exactly one positively charged atom, the positively charged atom being selected from the group consisting of nitrogen atom in a protonated or quarternized amino group or a phosphorous atom in a phosphonium group and/or
(ii) contains nffunctional groups selected from the group consisting of hydroxyl groups, ether groups, sulfonic acid ester groups, carboxylic acid ester groups and mixtures thereof, n_{f} being a number from 3 to 8, and/or
(iii) comprises a total number of carbon atoms n_{c} being from 4 to 10, and/or
(iv) has a ratio of n_{c}/(1 +nf) from 1 to 1.8, wherein n_{c} is the total number of carbon atoms of the delamination agent as defined under (iii) and n_{f} is the total number of functional groups in the delamination agent as defined under (ii), and/or
(v) contains nₜ atoms selected from the group consisting of carbon, nitrogen, phosphorous, oxygen, sulfur and mixtures thereof, nₜ being 10 to 35.

According to another embodiment of the present invention, the delamination agent
(i) is a compound having exactly one positively charged nitrogen atom, and/or
(ii) contains n_{f} functional groups selected from the group consisting of hydroxyl groups, ether groups and mixtures thereof, n_{f} being a number from 3 to 6, and/or
(iii) comprises a total number of carbon atoms n_{c} being from 5 to 9, and/or
(iv) has a ratio of n_{c}/(1 +n_{f}) from 1 to 1.5, wherein n_{c} is the total number of carbon atoms of the delamination agent as defined under (iii) and n_{f} is the total number of functional groups in the delamination agent as defined under (ii), and/or
(v) contains nₜ atoms selected from the group consisting of carbon, nitrogen, phosphorous, oxygen, sulfur and mixtures thereof, nₜ being 11 to 30, and/or
(vii) has a pKₐ ≥ 8.

According to another embodiment of the present invention, in step (c) the contacting of the layered zeolite with the delamination agent is done in an aqueous solution and preferably, the concentration of the delamination agent in the aqueous solution is from 0.02 to 2 mol/L, and even more preferably in the range of 0.03 to 1.5 mol/L.

According to another embodiment of the present invention, in step (c) the contacting of the layered zeolite with the delamination agent is done in an aqueous solution and preferably, the concentration of the layered zeolite in the aqueous solution is in the range from 0.1 to 100 g/L, preferably in the range from 1 to 50 g/L, more preferably in the range from 5 to 40 g/L and most preferably in the range from 10 to 30 g/L.

According to another embodiment of the present invention, in step (d) the aqueous medium after combination with the treated layered zeolite, has an ionic strength below 0.02 mol/L, preferably below 0.01 mol/L and most preferably below 0.005 mol/L.

According to another embodiment of the present invention, the aqueous medium in step (d) is water, preferably purified water.

According to another embodiment of the present invention, the delaminated layered zeolite dispersion comprises from 0.001 to 30 wt.-% of layered zeolite based on the total weight of the dispersion, preferably from 0.01 to 25 wt.-% and most preferably from 0.1 to 20 wt.-%.

According to another embodiment of the present invention, the delaminated layered zeolite dispersion comprises delaminated layered zeolite comprising 1 to 10 layers, preferably 1 to 8 layers and most preferably 1 to 5 layers and/or the delaminated layered zeolite has an aspect ratio of at least 500, preferably at least 1000 more preferably at least 1500 and most preferably at least 2000.

It should be understood that for the purposes of the present invention, the following terms have the following meanings:
A "delaminated layered zeolite" in the meaning of the present invention refers to a layered zeolite wherein the layers of the layered zeolite have been separated into individual silicate lamellae or into lamellae batches of only few lamellae. More precisely, a "delaminated layered zeolite" according to the present invention refers to a layered zeolite wherein at least 70% more preferably at least 80 % and most preferably at least 90 % of the number of layers of a layered zeolite have been separated into individual silicate lamellae or into lamellae batches of up to 20, preferably up to 15 and more preferably up to 10 silicate lamellae.

A "delamination agent" in the meaning of the present invention is an agent that can undergo a partially or fully cation exchange with the interlayer cations of the layered zeolite and does not react with the surface of the layered zeolite by forming covalent bonds.

The "cation exchange capacity" (CEC) in the meaning of the present invention is defined as the amount of positive charge that can be exchanged per mass of layered zeolite and is measured in equivalent units me/100g or meq/100g. The cation exchange capacity arises from various negative charges on the particle surfaces of the layered zeolite. The CEC is determined according to DIN EN ISO 1 1260:2017-04 using barium chloride.

The "aspect ratio" in the meaning of the present invention is defined as being the quotient of the platelet length of the layered zeolite and the height of the platelet of the layered zeolite.

Where the term "comprising" or "containing" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that, e.g. an embodiment must be obtained by e.g. the sequence of steps following the term "obtained" even though such a limited understanding is always included by the terms "obtained" or "defined" as a preferred embodiment.

In the following, the details and preferred embodiments of the present inventive will be described in more detail. Embodiments that refer to the process for delamination will also refer to the delaminated layered zeolite dispersion and the use thereof as well as the composition comprising the delaminated layered zeolite dispersion and vice versa.

According to the present invention a process for delamination of a layered zeolite in an aqueous medium is provided, the process comprising the steps of
(a) providing a layered zeolite,
(b) providing a delamination agent, wherein the delamination agent is characterized in that it
   (i) is a compound having exactly one positively charged atom, the positively charged atom being selected from the group consisting of nitrogen and phosphorous, and
   (ii) contains n_{f} functional groups selected from the group consisting of hydroxyl groups, ether groups, sulfonic acid ester groups, carboxylic acid ester groups and mixtures thereof, n_{f} being a number from 3 to 10, and
   (iii) comprises a total number of carbon atoms n_{c} being from 4 to 12, and
   (iv) has a ratio of n_{c}/(1 +n_{f}) from 1 to 2, wherein n_{c} is the total number of carbon atoms of the delamination agent as defined under (iii) and n_{f} is the total number of functional groups in the delamination agent as defined under (ii), and
   (v) contains nₜ atoms selected from the group consisting of carbon, nitrogen, phosphorous, oxygen, sulfur and mixtures thereof, nₜ being 9 to 40, and
   (vii) has a pKₐ ≥ 7,
(c) contacting the layered zeolite with the delamination agent to obtain a treated layered zeolite, wherein the amount of the delamination agent is at least 60% of the cation exchange capacity of the layered zeolite,
(d) contacting the treated layered zeolite with an aqueous medium to obtain a delaminated layered zeolite dispersion, wherein the delaminated layered zeolite has an aspect ratio of at least 200.

### Step a) the layered zeolite

According to the present invention a layered zeolite is provided in step a). The layered zeolite can be one layered zeolite or can be a mixture of more than one, for example, two, three or four layered zeolites. According to a preferred embodiment of the present invention the layered zeolite consists of only one layered zeolite.

The term "layered zeolite" in the meaning of the present invention refers to aluminum-free two-dimensional (2-D) oriented condensed structures comprising stacks of silicate lamellae, so-called tactoids.

According to a preferred embodiment of the present invention, the layered zeolite is represented by general formula (I)

(M₂O)ₙ(SiO₂)ₘ·(H₂O)ₓ

wherein M are alkali metals, n is from 0.5 to 10, m is from 1 to 25, and x is from 1 to 25.

"Alkali metals" in the meaning of the present invention are the metals in the first group of the periodic table. The group of the alkali metals consists of the chemical elements lithium (Li), sodium (Na), potassium (K), rubidium (Rb), caesium (Cs), and francium (Fr).

The alkali metal in the layered zeolite can be only one type of alkali metal. However, the alkali metal can also be a mixture of more than one alkali metals, for example two or three different alkali metals. For example the alkali metal can be a mixture of Li and Na. The amount can be 50:50 in the mixture, but also other ratios are possible. For example, if two alkali metals are present in a mixture, the first alkali metal can be present from 1 to 99 mol.-% preferably from 10 to 90 mol.-%, even more preferably from 20 to 80 mol.%, and most preferably from 30 to 70 mol.-% based on the total amount of the alkali metal and the second alkali metal can be present from 99 to 1 mol.-%, preferably from 90 to 10 mol.-%, even more preferably from 80 to 20 mol.%, and most preferably from 70 to 30 mol.-% based on the total amount of the alkali metal. According to a preferred embodiment the alkali metal consist of only just one type of alkali metal.

According to a preferred embodiment the alkali metal M is lithium (Li), sodium (Na) or potassium (K) and preferably sodium (Na).

The numbers n, m and x are independently from each other. According to a preferred embodiment n is from 1 to 5 and more preferably from 1 to 3. Additionally or alternatively, m is from 1 to 15, and preferably from 1 to 12 Additionally or alternatively, x is from 1 to 15, and preferably from 1 to 12.

The layered zeolites can be natural layered zeolites or can be synthetically layered zeolites.

"Natural layered zeolites" are natural occurring layered zeolites that can be obtained, for example by mining. The natural layered zeolites can be further processed before using in the present process for example, by washing or purifying to remove impurities or crushing or shredding to reduce the particle size. Such procedures are known to the skilled person and can be chosen from the skilled person depending on the available equipment and the impurities present in the natural layered zeolite.

If the layered zeolite that is used in the process of the present invention is a natural layered zeolite it may comprise impurities below 20 wt.-% based on the total weight of the layered zeolite, preferably below 10 wt.-%, more preferably below 5 wt.-% and most preferably below 1 wt.-%. Possible impurities are, for example, feldspar, SiO₂-polymorphs like quartz, carbonates like calcite, iron and Al-oxihydroxides.

"Synthetically layered zeolites" are layered zeolites that are produced synthetically. Methods and procedures to produce layered zeolites synthetically are well known to the skilled person. For example, one method to produce synthetically layered zeolites is described in "Swelling of MCM-56 and MCM-22P with a new medium - surfactant-tetramethylammonium hydroxide mixtures.", W. J. Roth, P. Chlubna, M. Kubů, D. Vitvarova, Catal. Today, 204, 8-14 (2013), or in Bergk, K.-H., Schwieger, W., Heyer, W., Porsch, M., 1985. "Verfahren zur Herstellung von Natriumoctosilikaten mit Schichtstruktur", or in Borbely, G., Beyer, H.K., Karge, H.G., Schwieger, W., Brandt, A., Bergk, K.H., 1991, "Chemical Characterization, Structural Features, and Thermal Behavior of Sodium and Hydrogen Octosilicate", Clays Clay Miner. 39, 490-497.

If the layered zeolite that is used in the process of the present invention is a synthetically layered zeolite it may comprise impurities below 10 wt.-% based on the total weight of the layered zeolite, preferably below 50 wt.-%, more preferably below 1 wt.-% and most preferably below 0.1 wt.-%. Possible impurities are, for example, SiO₂-polymorphs like quartz and Na-silicates.

According to one embodiment of the present invention the layered zeolite is ilerite, magadiite, kanemite, makatite or kenyaite and preferably ilerite. Such zeolites are natural layered zeolites. However, they can also be prepared synthetically. According to a preferred embodiment the layered zeolite is a synthetically layered zeolite.

Ilerite in the meaning of the present invention has the chemical formula (Na₂O)₁(SiO₂)₈·(H₂O)₉. Magadiite has the chemical formula (Na₂O)₁(SiO₂)₁₄·(H₂O)₁₁. Kenamite has the chemical formula (Na₂O)_{0.5}(SiO₂)₂·(H₂O)_{3.5}. Makatite has the chemical formula (Na₂O)₁(SiO₂)₄·(H₂O)₅. Kenyaite has the chemical formula (Na₂O)₁(SiO₂)₂₂·(H₂O)₁₀.

Additionally or alternatively, the layered zeolite consists of individual crystals. Individual crystals also known as single-crystal, or monocrystalline, are materials in which the crystal lattice of the material is continuous and unbroken to the edges of the sample, with no grain boundaries. According to a preferred embodiment, the layered zeolite consists of individual crystals.

Layered zeolites are known to the skilled person and are commercially available or can be prepared by the skilled person.

The layered zeolite provided in step a) according to the present invention has a platelet length of at least 200 nm, more preferably of at least 500 nm, even more preferably of at least 1.0 µm and most preferably of at least 2 µm. The platelet length in the meaning of the present invention is the greatest extension of the platelets in the lamellae plane.

### Step b) the delamination agent

A delamination agent is provided in step b). The delamination agent can be one delamination agent or can be a mixture of more than one, for example, two, three or four delamination agents. According to a preferred embodiment of the present invention the delamination agent consists of only one delamination agent.

The delamination agent is characterized in that it
(i) is a compound having exactly one positively charged atom, the positively charged atom being selected from the group consisting of nitrogen and phosphorous, and
(ii) contains nffunctional groups selected from the group consisting of hydroxyl groups, ether groups, sulfonic acid ester groups, carboxylic acid ester groups and mixtures thereof, n_{f} being a number from 3 to 10, and
(iii) comprises a total number of carbon atoms n_{c} being from 4 to 12, and
(iv) has a ratio of n_{c}/(1 +n_{f}) from 1 to 2, wherein n_{c} is the total number of carbon atoms of the delamination agent as defined under (iii) and n_{f} is the total number of functional groups in the delamination agent as defined under (ii), and
(v) contains nₜ atoms selected from the group consisting of carbon, nitrogen, phosphorous, oxygen, sulfur and mixtures thereof, nₜ being 9 to 40, and
(vii) has a pKₐ ≥ 7,

As a first chemical requirement, the delamination agent contains exactly one positively charged atom, the positively charged atom being selected from the group consisting of nitrogen and phosphorous.

A "positive charged atom" in the meaning of the present invention is an atom present in the delamination agent wherein the number of protons exceeds the number of electrons either by adding protons to an atom with a neutral charge or by removing electrons from a neutrally charged atom.

Nitrogen in the meaning of the present invention refers to the chemical element N and phosphor in the meaning of the present invention refers to the chemical element P.

According to a preferred embodiment of the present invention, the positively charged atom is a nitrogen atom of a protonated or quarternized amino group or a phosphorous atom in a phosphonium group. In that case the delaminating agent is an ionic compound (i. e. a salt), consisting of an anion and a cation, wherein in the cation contains a protonated or quarternized nitrogen atom or a phosphonium group.

According to a preferred embodiment of the present invention, the positively charged atom is a nitrogen atom of a protonated or quarternized amino group or a phosphorous atom in a phosphonium group and comprises at least one hydrogen atom. According to another preferred embodiment of the present invention such a positively charged atom is obtained by dissolving the initial form of the delamination agent in water and titrating it with an acid to a pH above 7, preferably between 7.5 and 13 and most preferably between 8 to 10. The "initial form" of the delamination agent is a compound that complies with the requirements regarding the delamination agent except the requirement that the compound comprises exactly one positively charged atom. Rather it does not comprise a positively charged atom. An "acid" in the meaning of the present invention refers to a Brønsted-Lowry acid and is capable of donating a proton (hydrogen ion H⁺).

For example, as the initial form of the delamination agent N-methyl-D-glucamine is used, which is dissolved in water and titrated to a pH between 8 to 10, for example about 9, by using an acid, for example HCl.

According to another embodiment of the present invention, the positively charged atom is a nitrogen atom of a protonated or quarternized amino group or a phosphorous atom in a phosphonium group and comprises at least one methyl group. Such a positively charged atom can be obtained, for example, by methylating the initial form of the delamination agent.

The protonated or quarternized amino group is defined as a polyatomic cation with the chemical formula NR⁺₄ wherein R is hydrogen, alkyl, or alkenyl group. R can be different or the same. The phosphonium group or phosphinium group is defined as a polyatomic cation with the chemical formula PR⁺₄ wherein R is hydrogen, alkyl, or alkenyl group. R can be different or the same.

The terms "alkyl" and "aliphatic" in the meaning of the present invention refer to a linear or branched, saturated organic compound composed of carbon and hydrogen. For example, "alkyl carboxylic acids" are composed of linear or branched, saturated hydrocarbon chains containing a pendant carboxylic acid group. The linear or branched, saturated organic compound can further comprise atoms selected from the group consisting of nitrogen, phosphorous, oxygen and sulfur. These further atoms can be present in the chain or attached thereto.

A linear group is understood to be a group, wherein each carbon atom has a direct bond to 1 or 2 other carbon atoms. A branched group is understood to be a group, wherein at least one carbon atom has a direct bond to 3 or 4 other carbon atoms. A saturated group is understood to be a group, which does not contain a carbon-carbon multiple bond, i.e., a carbon-carbon double bond or a carbon-carbon triple bond. A cyclic group is understood to be a group, wherein at least three carbon atoms are linked together in a way such as to form a ring. An acyclic group is understood to be a group, wherein no ring is present.

The term "alkenyl" in the meaning of the present invention refers to a linear or branched, unsaturated organic compound composed of carbon and hydrogen. Said organic compound further contains at least one double bond in the substituent, preferably one double bond. It is appreciated that the term "alkenyl" in the meaning of the present invention includes the cis and trans isomers. The linear or branched, saturated organic compound can further comprise atoms selected from the group consisting of nitrogen, phosphorous, oxygen and sulfur. These further atoms can be present in the chain or attached thereto.

According to a preferred embodiment of the present invention the positively charged atom is a nitrogen atom and more preferably the positively charged atom is a nitrogen atom of a protonated or quarternized amino group. Even more preferably, the protonated or quarternized nitrogen atom is preferably the nitrogen atom of an amino polyol, preferably having at least 3 hydroxyl groups. The amino polyol is even more preferably selected from the group consisting of amino sugars or N-alkyl amino sugars, wherein the C=O functionalities have been reduced to CH-OH functionalities. Suitable examples for amino sugars are e. g. glucosamine, galactosamine, fructosamine and mannosamine. An N-methylated amino sugar is e.g. N-methyl-D-glucamine. Most preferred are glucosamine and N-methyl-D-glucamine, in their protonated or quarternized forms. In that case the anions are preferably halide ions such as chloride or iodide or nitrate and sulfate.

A second chemical requirement is that the delamination agent contains n_{f} functional groups selected from the group consisting of hydroxyl groups, ether groups, sulfonic acid ester groups, carboxylic acid ester groups and mixtures thereof, n_{f} being a number from 3 to 10.

Preferably, n_{f} is a number from 3 to 8 more preferred 3 to 6 and most preferred 3 to 5.

A hydroxy or hydroxyl group in the meaning of the present invention is the entity with the formula OH. It contains an oxygen bonded to a hydrogen.

An ether group in the meaning of the present invention is an oxygen atom connected to two alkyl or alkenyl groups. They have the general formula R-O-R', where R and R' represent the alkyl or alkenyl groups.

A sulfonic acid ester group in the meaning of the present invention refers to the group R-SO₂-O-R' where R and R' represent the alkyl or alkenyl groups.

A carboxylic acid ester group in the meaning of the present invention refers to the group R-CO-O-R' where R and R' represent the alkyl or alkenyl groups.

According to a preferred embodiment of the present invention the n_{f} functional groups are selected from the group consisting of hydroxyl groups, ether groups, carboxylic acid ester groups and mixtures thereof and more preferably, the n_{f} functional groups are selected from the group consisting of hydroxyl, ether groups and mixtures thereof and most preferably the nffunctional groups are hydroxyl groups.

The n_{f} functional groups can consist of only one type of functional group, for example only hydroxyl groups, or only ether groups, or only sulfonic acid ester groups, or only carboxylic acid ester groups. Alternatively, the n_{f} functional groups are a mixture of more than one type of group, for example two types of groups or three types of groups are present in the delamination agent. However, even if different types of groups are present in the delaminating agent the number n_{f} that refers to the total amount of the functional groups is a number from 3 to 10.

The functional groups guarantee a minimum extent of hydrophilicity of the delamination agent beside the positively charged atom of the above first chemical requirement.

A third chemical requirement is that the delamination agent comprises a total number of carbon atoms n_{c} being from 4 to 12. According to a preferred embodiment the delamination agent comprises a total number of carbon atoms n_{c} being from 4 to 10, more preferably 5 to 9 and most preferably 5 to 7, particularly preferred 6 or 7. The total number of carbon atoms also includes such carbon atoms present in the above functional groups, such as the carbon atoms of a carboxylic acid ester group.

A fourth chemical requirement is that the delamination agent has a ratio n_{c}/(1 + n_{f}) from 1 to 2, wherein n_{c} is the total number of carbon atoms of the delamination agent and n_{f} is the total number of functional groups in the delamination agent as defined above.

According to a preferred embodiment of the present invention the delamination agent has a ratio n_{c}/(1 + n_{f}) from 1 to 1.8, more preferred from 1 to 1.5 and even further preferred from 1 to 1.3 wherein n_{c} is the total number of carbon atoms of the delamination agent and n_{f} is the total number of functional groups in the delamination agent as defined above.

A fifth chemical requirement is that the delamination agent contains nₜ atoms selected from the group consisting of carbon, nitrogen, phosphorous, oxygen, sulfur and mixtures thereof, nₜ being 9 to 40.

Carbon in the meaning of the present invention refers to the chemical element C, oxygen in the meaning of the present invention refers to the chemical element O and sulfur in the meaning of the present invention refers to the chemical element S.

According to a preferred embodiment of the present invention the nₜ atoms are selected from the group consisting of carbon, nitrogen, oxygen, sulfur and mixtures thereof, and more preferably are selected from the group consisting of carbon, nitrogen, oxygen, and mixtures thereof.

According to another preferred embodiment the delamination agent contains a total number of atoms nₜ being selected from the group consisting of carbon, nitrogen, phosphorous, oxygen, sulfur and mixtures thereof from 10 to 35, more preferably 11 to 30 and most preferably 12 to 20, particularly preferred 12 or 13. The total number of atoms nₜ also includes such atoms present in the above functional groups such as, for example, the carbon atoms of a carboxylic acid ester group or the nitrogen atom of the positively charged atom.

Finally, a sixth chemical requirement is that the delamination agent has a pKₐ ≥ 7.

The pKₐ in the meaning of the present invention is defined as pKₐ = - log₁₀ Kₐ. Kₐ the acid dissociation constant, also known as acidity constant, or acid-ionization constant is a quantitative measure of the strength of an acid in solution. It is the equilibrium constant for a chemical reaction HA → A⁻ + H⁺ known as dissociation in the context of acid-base reactions. The chemical species HA is an acid that dissociates into A⁻, the conjugate base of the acid and a hydrogen ion, H⁺. The pKₐ is measured by potentiometric titration of the base with HCI. Potentiometric titration is known to the skilled person and devices therefore are commercially available. According to a preferred embodiment the potentiometric titration is done in a beaker by dissolving the compound in water and titrating it with HCI of known molarity while recording the pH using a pH electrode.

According to a preferred embodiment of the present invention the delamination agent has a pKₐ ≥ 8 and more preferably ≥ 9. According to another embodiment of the present invention the delamination agent has a pKₐ ≤ 14, more preferably ≤ 12 and most preferably ≤ 10. For example, the delamination agent has a pKₐ between 7 and 14, preferably between 8 and 12 and most preferably between 9 and 10.

According to another embodiment of the present invention, the delamination agent has a pH ≥ 7, more preferably ≥ 8 and most preferably ≥ 9. According to another embodiment of the present invention the delamination agent has a pH ≤ 14, more preferably ≤ 12 and most preferably ≤ 10. For example, the delamination agent has a pH between 7 and 14, preferably between 8 and 12 and most preferably between 9 and 10.

According to a preferred embodiment of the present invention, the delamination agent
(i) is a compound having exactly one positively charged atom, the positively charged atom being selected from the group consisting of nitrogen atom in a protonated or quarternized amino group or a phosphorous atom in a phosphonium group or
(ii) contains nffunctional groups selected from the group consisting of hydroxyl groups, ether groups, sulfonic acid ester groups, carboxylic acid ester groups and mixtures thereof, n_{f} being a number from 3 to 8, or
(iii) comprises a total number of carbon atoms n_{c} being from 4 to 10, or
(iv) has a ratio of n_{c}/(1 +n_{f}) from 1 to 1.8, wherein n_{c} is the total number of carbon atoms of the delamination agent as defined under (iii) and n_{f} is the total number of functional groups in the delamination agent as defined under (ii), or
(v) contains nₜ atoms selected from the group consisting of carbon, nitrogen, phosphorous, oxygen, sulfur and mixtures thereof, nₜ being 10 to 35.

According to another embodiment of the present invention, the delamination agent
(i) is a compound having exactly one positively charged atom, the positively charged atom being selected from the group consisting of nitrogen atom in a protonated or quarternized amino group or a phosphorous atom in a phosphonium group and
(ii) contains n_{f} functional groups selected from the group consisting of hydroxyl groups, ether groups, sulfonic acid ester groups, carboxylic acid ester groups and mixtures thereof, n_{f} being a number from 3 to 8, and
(iii) comprises a total number of carbon atoms n_{c} being from 4 to 10, and
(iv) has a ratio of n_{c}/(1 +n_{f}) from 1 to 1.8, wherein n_{c} is the total number of carbon atoms of the delamination agent as defined under (iii) and n_{f} is the total number of functional groups in the delamination agent as defined under (ii), and
(v) contains nₜ atoms selected from the group consisting of carbon, nitrogen, phosphorous, oxygen, sulfur and mixtures thereof, nₜ being 10 to 35.

According to another preferred embodiment of the present invention, the delamination agent
(i) is a compound having exactly one positively charged nitrogen atom, or
(ii) contains nffunctional groups selected from the group consisting of hydroxyl groups, ether groups and mixtures thereof, n_{f} being a number from 3 to 6, or
(iii) comprises a total number of carbon atoms n_{c} being from 5 to 9, or
(iv) has a ratio of n_{c}/(1 +n_{f}) from 1 to 1.5, wherein n_{c} is the total number of carbon atoms of the delamination agent as defined under (iii) and n_{f} is the total number of functional groups in the delamination agent as defined under (ii), or
(v) contains nₜ atoms selected from the group consisting of carbon, nitrogen, phosphorous, oxygen, sulfur and mixtures thereof, nₜ being 11 to 30, or
(vii) has a pKₐ ≥ 8.

According to another preferred embodiment of the present invention, the delamination agent
(i) is a compound having exactly one positively charged nitrogen atom, and
(ii) contains n_{f} functional groups selected from the group consisting of hydroxyl groups, ether groups and mixtures thereof, n_{f} being a number from 3 to 6, and
(iii) comprises a total number of carbon atoms n_{c} being from 5 to 9, and
(iv) has a ratio of n_{c}/(1 +n_{f}) from 1 to 1.5, wherein n_{c} is the total number of carbon atoms of the delamination agent as defined under (iii) and n_{f} is the total number of functional groups in the delamination agent as defined under (ii), and
(v) contains nₜ atoms selected from the group consisting of carbon, nitrogen, phosphorous, oxygen, sulfur and mixtures thereof, nₜ being 11 to 30, and
(vii) has a pKₐ ≥ 8.

### Step c) Contacting Step

In step c) the layered zeolite is contacted with the delamination agent to obtain a treated layered zeolite, wherein the amount of the delamination agent is at least 60% of the cation exchange capacity of the layered zeolite.

The contacting step can be performed under mixing conditions, in one or more steps, in any order. The skilled man will adapt these mixing conditions (such as the configuration of mixing speed and mixing equipment) according to his process equipment. For example, contacting can be performed by overhead shaking in a sealable vessel or by stirring with a stirrer.

The layered zeolite is contacted with the delamination agent in any order. For example, the layered zeolite is added to the delamination agent. Alternatively, the delamination agent is added to the layered zeolite. Alternatively, the delamination agent and the layered zeolite are added simultaneously.

In case the delamination agent is a solid at room temperature, the delamination agent is dissolved in water before contacting step c). According to one embodiment of the present invention the obtained aqueous solution comprises the delamination agent from 0.02 to 2 mol/L, and even more preferably in the range of 0.03 to 1.5 mol/L based on the total weight of the aqueous solution.

The term "aqueous solution" in the meaning of the present invention refers to the mixture of water and the delamination agent. However, further solvents that are miscible with water can be added to the aqueous solution.

The term "solid" according to the present invention refers to a material that is solid under standard ambient temperature and pressure (SATP) which refers to a temperature of 298.15 K (25 °C) and an absolute pressure of exactly 1 bar. The solid may be in the form of a powder, tablet, granules, flakes etc. Accordingly, the term "liquid medium" refers to a material that is liquid under standard ambient temperature and pressure (SATP) which refers to a temperature of 298.15 K (25 °C) and an absolute pressure of exactly 1 bar.

According to a preferred embodiment, the delamination agent is dissolved in water and the layered zeolite is added to the solution of the delamination agent. The addition of the layered zeolite can be done in one portion or in several portions. If the addition is done in several portions, the portions can be different or equal.

According to another embodiment of the present invention the layered zeolite can be suspended in water before contacting step c). According to one embodiment of the present invention the obtained aqueous suspension comprises the layered zeolite from 0.1 to 100 g/L, more preferably from 1 to 50 g/L, even more preferably in the range from 5 to 40 g/L and most preferably in the range from 10 to 30 g/L based on the total weight of the aqueous suspension.

The term "aqueous suspension" in the meaning of the present invention refers to the mixture of water and the layered zeolite. However, further solvents that are miscible with water can be added to the aqueous suspension.

According to another embodiment, the delamination agent is added to the suspension of the layered zeolite. The addition of the delamination agent can be done in one portion or in several portions. If the addition is done in several portions, the portions can be different or equal.

According to another embodiment, both, the delamination agent and the layered zeolite are dissolved/suspended in water and the aqueous solution comprising the delamination agent and the aqueous suspension comprising the layered zeolite are contacted in any order and preferably the suspension comprising the layered zeolite is added to the solution comprising the delamination agent.

The amount of the delamination agent added to the layered zeolite is at least 60% of the cation exchange capacity of the layered zeolite. The "cation exchange capacity" (CEC) in the meaning of the present invention is defined as the amount of positive charge that can be exchanged per mass of layered zeolite and is measured in equivalent units me/100g or meq/100g. The added amount refers to the total amount of delamination agent added during step c). However, if step c) is performed more than one time, for example, two or three times than the total amount of the delamination agent added to layered zeolite refers to the amount for each step c).

According to a preferred embodiment of the present invention the amount of the delamination agent added to the layered zeolite is at least 90% of the cation exchange capacity of the layered zeolite, more preferably at least 100%, even more preferably at least 120% and most preferably at least 150% of the cation exchange capacity of the layered zeolite.

According to another preferred embodiment of the present invention, the concentration of the delamination agent in the aqueous solution is from 0.02 to 2 mol/L, and even more preferably in the range of 0.03 to 1.5 mol/L, based on the total weight of the mixture after contacting with the layered zeolite.

According to another preferred embodiment of the present invention, the concentration of the layered zeolite in the aqueous solution is in the range from 0.1 to 100 g/L, preferably in the range from 1 to 50 g/L, even more preferably in the range from 5 to 40 g/L and most preferably in the range from 10 to 30 g/L, based on the total weight of the mixture after contacting with the delamination agent.

According to another preferred embodiment of the present invention, the concentration of the delamination agent in the aqueous solution is from 0.02 to 2 mol/L, and even more preferably in the range of 0.03 to 1.5 mol/L, and the concentration of the layered zeolite in the aqueous solution is in the range from 0.1 to 100 g/L, preferably in the range from 1 to 50 g/L, even more preferably in the range from 5 to 40 g/L and most preferably in the range from 10 to 30 g/L, based on the total weight of the mixture after contacting the delamination agent and the layered zeolite.

If step c) is performed before step d) it is required in general that the concentration of the delamination agent is chosen to be high enough to prevent a premature delamination of the layered zeolite during step c).

In one embodiment, step c) is carried out at a temperature in the range from 1 to 100°C, more preferably from 15 to 90°C and most preferably from 20 to 80°C. Contacting can be performed for at least 1 s, at least 10 s, at least 30 s, at least 1 min, at least 10 min or at least 1 h.

From step c) a suspension is obtained that comprises the treated layered zeolite. The treated layered zeolite is not delaminated. However, the interlayer space can be broadened, depending on the size of the delamination agent.

Treatment step c) can be performed one time. Alternatively, treatment step c) can be performed several times, for example, two times or three times. Preferably, treatment step c) is performed less than six times. In case the treatment step c) is performed more than one time the aqueous solution and the treated layered zeolite are separated, for example, the aqueous solution is decanted after settling of the treated layered zeolite and delamination agent is again added to the treated layered zeolite as described above.

### Step d) Contacting Step

In step d) the treated layered zeolite is contacted with an aqueous medium to obtain a delaminated layered zeolite dispersion, wherein the delaminated layered zeolite has an aspect ratio of at least 200.

The treated layered zeolite is obtained from step c) by contacting the layered zeolite with the delamination agent to obtain a treated layered zeolite.

According to one embodiment of the present invention, step d) is performed after step c). According to another embodiment of the present invention step d) is performed during step c). More precisely, step c) and d) are performed simultaneously, for example, in one vessel. However, in that case also a treated layered zeolite is obtained before the treated layered zeolite is delaminated, but these two steps take place consecutively in a relative short amount of time. Therefore, the treated layered zeolite cannot be isolated in that case. According to a preferred embodiment, if step c) results in a sufficiently low ionic strength, steps c) and d) may be performed simultaneously.

The term "aqueous medium" in the meaning of the present suspension refers to a solution comprising at least 50 wt.-% water, based on the total weight of the aqueous medium. More preferably, the aqueous medium comprises at least 70 wt.-% water, even more preferably at least 80 wt.-% water and most preferably at least 90 wt.-% water, based on the total weight of the aqueous medium.

Alternatively, the aqueous medium merely consists of water.

The water of the present invention may be selected from drinking water, purified water, distilled water, and mixtures thereof. According to a preferred embodiment of the present invention the water is demineralized water.

Drinking water, also known as potable water, is water that is safe to drink or to use for food preparations. Purified or demineralized water is specially purified water that has had most or all of its mineral and salt ions removed, such as calcium, magnesium, sodium, chloride, sulphate, nitrate and bicarbonate. It is also known as deionized water. Distilled water is water that has been boiled into vapor and condensed back into liquid in a separate container.

According to a preferred embodiment of the present invention, the aqueous medium in step (d) is water, preferably purified water.

According to one embodiment of the present invention, the aqueous medium further comprises an organic solvent.

An "organic solvent" in the meaning of the present invention is a compound that is liquid at room temperature and that is different from water. Room temperature refers to a temperature of 25 °C. Preferably the organic solvent is miscible with water.

The organic solvent of the present invention can be any organic solvent that is suitable for the inventive composition. The skilled person knows how to select such an organic solvent. Organic solvents are known to the skilled person and are commercially available.

According to one embodiment of the present invention, the organic solvent is selected from the group consisting of methanol, ethanol, dioxane, acetone, dimethyl sulfoxide, dimethylformamide, ethylene glycol, ethylacetate, glycerol, ethylene and propylene carbonate, N-methylformamide, N-methylacetamide, dimethylacetamide, glycerol carbonate and mixtures thereof.

Methanol, also known as methyl alcohol among others, is a chemical with the formula CH₃OH. Ethanol, also known as ethyl alcohol among others, is a chemical with the formula CH₃-CH₂-OH.

Dioxane is a heterocyclic organic compound, classified as an ether. It is a colorless liquid with a faint sweet odor. Dioxane comprises the isomers 1,2- dioxane, 1,3-dioxane and 1,4-dioxane.

Acetone, or propanone, is the organic compound with the formula (CH₃)₂CO. It is a colorless, volatile, flammable liquid and is the simplest and smallest ketone.

Dimethyl sulfoxide (DMSO) is an organosulfur compound with the formula (CH₃)₂SO. This colorless liquid is a polar aprotic solvent that dissolves both polar and nonpolar compounds and is miscible in a wide range of organic solvents as well as water.

Dimethylformamide is an organic compound with the formula (CH₃)₂NC(O)H. Commonly abbreviated as DMF, this colorless liquid is miscible with water and the majority of organic liquids.

N-methylformamide is an organic compound with the formula CH₃NHCHO. Commonly abbreviated as NMF, this colorless and odorless liquid is miscible with water.

Ethylene glycol also known as ethane-1,2-diol is an organic compound with the chemical formula (CH₂OH)₂. It is an odorless, colorless, sweet-tasting, viscous liquid.

Ethyl acetate is an organic compound with the formula CH₃-COO-CH₂-CH₃. It is a colorless liquid and has a characteristic sweet smell. Ethyl acetate is the ester of ethanol and acetic acid.

Glycerol is also called glycerine or glycerin or propane-1,2,3-triol and is a simple polyol compound. It is a colorless, odorless, viscous liquid that is sweet-tasting and non-toxic. It has the chemical formula CH₂OH-CHOH-CH₂OH.

Ethylene and propylene carbonate are organic compounds with the formulas (CH₂O)₂CO and C₄H₆O₃. They are classified as carbonate esters. Ethylene carbonate is a transparent crystalline solid, practically odorless and colorless at room temperature. Propylene carbonate is a colorless and odorless liquid at room temperature.

Dimethylacetamide (DMAc or DMA) is the organic compound with the formula CH₃C(O)N(CH₃)₂. It is a colorless, water-miscible, high-boiling liquid.

N-methylacetamide is the organic compound with the formula CH₃C(O)NHCH₃. It is a hygroscopic solid at room temperature that is soluble in water.

Glycerol carbonate is an almost colorless liquid at room temperature with the formula C₄H₆O.

According to one embodiment of the present invention the organic solvent is present in the aqueous medium in an amount of less than 50 wt.-%, based on the total weight of the aqueous medium. More preferably, the aqueous medium comprises less than 30 wt.-% organic solvent, even more preferably less than 20 wt.-% organic solvent and most preferably less than 10 wt.-% water, based on the total weight of the aqueous medium.

The contacting step can be performed under mixing conditions, in one or more steps, in any order. The skilled man will adapt these mixing conditions (such as the configuration of mixing speed and mixing equipment) according to his process equipment. For example, contacting can be performed by overhead shaking or a speed mixer in a sealable vessel or by stirring with a stirrer.

The treated layered zeolite is contacted with the aqueous medium in any order. For example, the treated layered zeolite is added to the aqueous medium. Alternatively, the aqueous medium is added to the treated layered zeolite. Alternatively, the aqueous medium and the treated layered zeolite are added simultaneously.

In step d) the treated layered zeolite is contacted with the aqueous medium, preferably of low ionic strength, to obtain a delaminated layered zeolite dispersion.

The "ionic strength" of a solution or suspension in the meaning of the present invention is the total amount of the concentration of ions in that solution or suspension and the ionic strength is measure in mol/L solution or supernatant.

According to one embodiment of the present invention, the aqueous medium provided in step d) has an ionic strength below 0.02 mol/l, preferably below 0.01 mol/I and most preferably below 0.005 mol/L. Additionally or alternatively, according to another embodiment of the present invention, the aqueous medium provided in step d) has an ionic strength above 0.0001 mol/L, preferably above 0.0005 mol/L and most preferably above 0.001 mol/L.

According to another embodiment of the present invention the aqueous medium after combination with the treated layered zeolite in step d), has an ionic strength below 0.02 mol/L, preferably below 0.01 mol/L and most preferably below 0.005 mol/L. Additionally or alternatively, according to another embodiment of the present invention, the aqueous medium after combination with the treated layered zeolite in step d), has an ionic strength above 0.0001 mol/L, preferably above 0.0005 mol/L and most preferably above 0.001 mol/L. The aqueous medium after combination with the treated layered zeolite in step d) refers to the liquid phase of the delaminated layered zeolite dispersion obtained after step d).

Treatment step d) can be performed one time. Alternatively, treatment step d) can be performed several times, for example, two times or three times. Preferably, treatment step d) is performed less than six times. In case the treatment step d) is performed more than one time the liquid phase of the delaminated layered zeolite dispersion is separated, for example, the liquid phase is decanted after settling of the delaminated layered zeolite and an aqueous medium is again added to the delaminated layered zeolite as described above. Alternatively, the delaminated layered zeolite dispersion is concentrated, for example by centrifugation and the obtained supernatant is decanted and afterwards the concentrated delaminated layered zeolite dispersion is again suspended in an aqueous medium.

The delaminated layered zeolite dispersion obtained in step d) comprises delaminated layered zeolite that has an aspect ratio of at least 200.

The aspect ratio is defined as being the quotient of the platelet length of the layered zeolite and the height of the platelet of the layered zeolite. The aspect ratio is determined by concomitantly measuring the length and thickness of a statistically significant (> 50) number of delaminated zeolite platelets by atomic force microscopy (AFM). AFMs are known to the skilled person and is commercially available. Preferably a Dimension 3100 NanoScope IV unit equipped with OTESPA-R3 (Bruker) silicon tips is used in tapping mode.

According to a preferred embodiment of the present invention, the delaminated layered zeolite dispersion comprises delaminated layered zeolite wherein the delaminated layered zeolite has an aspect ratio of at least 500, preferably at least 1000 more preferably at least 1500 and most preferably at least 2000.

The inventors surprisingly found that the foregoing process provides dispersions comprising delaminated layered zeolites with an aspect ratio of at least 200. Furthermore, as described above, the inventors surprisingly found that the delaminating agents according to the present invention can be used to delaminate different layered zeolites. Additionally, the inventive process for the delamination does not lead to chemically modified layers even after delamination and, therefore, the originally characteristics of the single lamellae remain unchanged.

The present delaminating agents are polar and, therefore, water-soluble. Thus the inventive process can be performed in an aqueous medium, which is a cheap and environmentally friendly solvent. Furthermore, the compounds used in the inventive process, namely the layered zeolite and the delaminating agent are non-toxic to humans and do not provide a harmful effect on the environment. Additionally, the inventors surprisingly found that the process of the present invention can be easily and quickly performed, is cheap, scalable and especially easy to handle. Moreover, it is water-born and atom efficient and therefore environmental friendly.

### Further treatment steps

The process according to the present invention may comprise a further step e) of washing the obtained delaminated layered zeolite dispersion.

Washing of delaminated layered zeolite dispersion is known to the skilled person and will be performed by the skilled person dependent on the available equipment.

For example, the delaminated layered zeolite dispersion is concentrated, for example by centrifugation and the obtained supernatant is decanted and afterwards the concentrated delaminated layered zeolite dispersion is again suspended in an aqueous medium. Alternatively, the washing step can be performed by dialysis.

According to a preferred embodiment of the present invention the washing is performed several times to remove excess ions present in the delaminated layered zeolite dispersion. Preferably, washing is performed until the concentration of the anions or halide ions present in the supernatant or the dialysis water is below 0.1 mol/l, preferably below 0.05 mol/I and most preferably below 0.02 mol/l. The presence of halide ions in the supernatant or the dialysis water can be monitored by the silver nitrate test which is known to the skilled person. Sulfate can be monitored by the barium nitrate test, while nitrate needs to be monitored by chromatography.

The process according to the present invention may comprise a further step f) of drying the treated layered zeolite obtained after step c) and/or the obtained delaminated layered zeolite dispersion

The drying may be carried out in a single step such as spray drying or freeze drying, or in at least two steps, e.g. by applying a first heating step to the treated layered zeolite obtained after step c) and/or to the delaminated layered zeolite dispersion in order to reduce the associated moisture content. The residual total moisture content may be further reduced by applying a second heating step to the treated layered zeolite obtained after step c) and/or to the delaminated layered zeolite dispersion. In case said drying is carried out by more than one drying steps, the first step may be carried out by heating in a hot current of air, while the second and further drying steps are preferably carried out by an indirect heating.

The term "dry" material or "dry" composition, is understood to be a material/composition having less than 5.0 % by weight of water relative to the material/composition weight. The % water (equal to residual total moisture content) is determined according to the Coulometric Karl Fischer measurement method, wherein the material/composition is heated to 220°C, and the water content released as vapour and isolated using a stream of nitrogen gas (at 100 ml/min) is determined in a Coulometric Karl Fischer unit.

Before the drying step the treated layered zeolite obtained after step c) and/or the delaminated layered zeolite dispersion may be washed one or several times with an organic solvent and preferably with acetone.

After drying the treated layered zeolite obtained after step c) and/or the delaminated layered zeolite dispersion, the treated layered zeolite and/or the delaminated layered zeolite is obtained in solid form, preferably in form of a particulate material. The term "particulate" in the meaning of the present application refers to materials composed of a plurality of particles. Said plurality of particles may be defined, for example, by its particle size distribution. The expression "particulate material" may comprise powders, grains, tablets, flakes or crumbles.

### The delaminated layered zeolite dispersion

The present invention further refers to a delaminated layered zeolite dispersion. The delaminated layered zeolite dispersion according to the present invention comprises below 35 wt.-% of layered zeolite based on the total weight of the dispersion, wherein the delaminated layered zeolite has an aspect ratio of at least 200.

The delaminated layered zeolite dispersion can be obtained by the process according to the present invention. According to one embodiment of the present invention, the delaminated layered zeolite dispersion is obtained by a process comprising the steps of
(a) providing a layered zeolite,
(b) providing a delamination agent, wherein the delamination agent is characterized in that it
   (i) is a compound having exactly one positively charged atom, the positively charged atom being selected from the group consisting of nitrogen and phosphorous, and
   (ii) contains nffunctional groups selected from the group consisting of hydroxyl groups, ether groups, sulfonic acid ester groups, carboxylic acid ester groups and mixtures thereof, n_{f} being a number from 3 to 10, and
   (iii) comprises a total number of carbon atoms n_{c} being from 4 to 12, and
   (iv) has a ratio of n_{c}/(1 +n_{f}) from 1 to 2, wherein n_{c} is the total number of carbon atoms of the delamination agent as defined under (iii) and n_{f} is the total number of functional groups in the delamination agent as defined under (ii), and
   (v) contains nₜ atoms selected from the group consisting of carbon, nitrogen, phosphorous, oxygen, sulfur and mixtures thereof, nₜ being 9 to 40, and
   (vii) has a pKₐ ≥ 7,
(c) contacting the layered zeolite with the delamination agent to obtain a treated layered zeolite, wherein the amount of the delamination agent is at least 60% of the cation exchange capacity of the layered zeolite,
(d) contacting the treated layered zeolite with an aqueous medium to obtain a delaminated layered zeolite dispersion, wherein the delaminated layered zeolite dispersion comprises below 35 wt.-% of layered zeolite based on the total weight of the dispersion, wherein the delaminated layered zeolite has an aspect ratio of at least 200.

According to the present invention, the amount of aqueous medium added in step d) is such that the obtained delaminated zeolite dispersion comprises the delaminated layered zeolite in an amount of below 35 wt.-% of layered zeolite based on the total weight of the dispersion, preferably in an amount such that the obtained delaminated zeolite dispersion comprises the delaminated layered zeolite in an amount of below 30 wt.-%, more preferably below 25 wt.-% and most preferably below 20 wt.-% of layered zeolite based on the total weight of the dispersion.

According to one embodiment of the present invention, the amount of aqueous medium added in step d) is such that the obtained delaminated zeolite dispersion comprises the delaminated layered zeolite in an amount of 0.0001 wt.-% to <35 wt.-% of layered zeolite based on the total weight of the dispersion, preferably in an amount such that the obtained delaminated zeolite dispersion comprises the delaminated layered zeolite in an amount of 0.001 to 30 wt.-%, more preferably 0.01 to 25 wt.-% and most preferably 0.1 to 20 wt.-% of layered zeolite based on the total weight of the dispersion.

According to another embodiment of the present invention, the dispersion comprises from 0.001 to 30 wt.-% of layered zeolite based on the total weight of the dispersion, preferably from 0.01 to 25 wt.-% and most preferably from 0.1 to 20 wt.-%.

The delaminated layered zeolite dispersion according to the present invention comprises delaminated layered zeolite. A "delaminated layered zeolite" in the meaning of the present invention refers to a layered zeolite wherein the layers of the layered zeolite have been separated into individual silicate lamellae or into lamellae batches of only few lamellae. More precisely, a "delaminated layered zeolite" according to the present invention refers to a layered zeolite wherein at least 70% more preferably at least 80 % and most preferably at least 90 % of the number of layers of a layered zeolite have been separated into individual silicate lamellae or into lamellae batches of up to 20, preferably up to 15 and more preferably up to 10 silicate lamellae.

According to a preferred embodiment of the present invention, the delaminated layered zeolite dispersion comprises delaminated layered zeolite comprising 1 to 10 layers, preferably 1 to 8 layers and most preferably 1 to 5 layers.

Additionally or alternatively, the delaminated layered zeolite dispersion comprises delaminated layered zeolite that has an aspect ratio of at least 500, preferably at least 1000 more preferably at least 1500 and most preferably at least 2000.

### Use of the delaminated layered zeolite dispersion

The delaminated layered zeolite dispersion according to the present invention can be used in the production of a composite material, a coating material, as a membrane material, or as a flameproof barrier or as a diffusion barrier and preferably as a membrane material, for example, a (perm-)selective membrane material.

For example, a dispersion of the delaminated layered zeolite is used to apply a flameproof or diffusion barrier or membrane such as a (perm-)selective membrane to a substrate. To that end, the dispersion is applied to a substrate and then the solvent is removed, for example by drying. The application can be done by any technique suitable for said material, for example by spraying or painting. The skilled person knows such techniques and can apply them dependent on the available equipment.

The substrate can be any substrate that is suitable for the present invention, for example, a foil, a paper, a sheet, a cardboard, a piece of metal, a porous ceramic or glass. Such substrates are known to the skilled person and commercially available.

The invention further provides a composition selected from the group consisting of coating materials, composite materials and membrane materials, comprising the delaminated layered zeolite dispersion according to the present invention.

According to a preferred embodiment of the present invention, the composition comprises a composite material. Preferably, the composite material comprises a polymer. The polymer can, for example, be a polymer that has been produced by polycondensation, polyaddition, radical polymerisation, ionic polymerisation or copolymerization. Examples of such polymers are polyurethanes, polycarbonate, polyamide, PMMA, polyesters, polyolefins, rubber, polysiloxanes, EVOH, polylactides, polystyrene, PEO, PPO, PAN, PVP or polyepoxides. Such polymers are known to the skilled person and commercially available. The skilled person will choose the polymer dependent on the application.

According to a preferred embodiment of the present invention, the delaminated layered zeolite in form of the dispersion or in dried form is incorporated into a conventional polymer as described above. Incorporation into polymers can be carried out by means of conventional techniques such as, for example, extrusion, kneading processes, rotor-stator processes (Dispermat, Ultra-Turrax, etc.), grinding processes or jet dispersion and is dependent on the viscosity of the polymers and on the available equipment. Such processes are known to the skilled person.

In the following the invention is further explained by means of examples. However, the examples do not restrict the present invention.

### Figures

Fig. 1: Small angle X-ray scattering (SAXS) measurement of delaminated layered zeolite dispersions.
Fig. 2: Electron microscope (SEM) image of layered zeolite (left) and atomic force microscopy (AFM) image of the delaminated layered zeolite (right).

### Experimental Section

### Measurement methods

In the following, measurement methods implemented in the examples are described.

### Powder X-ray diffraction (PXRD)

Phase purity and crystallinity of the layered zeolite were measured with powder X-ray diffraction (PXRD).

The dry layered zeolite has been put in glass capillaries with a diameter of 0.7 mm and has been sealed. The PXRD patterns were recorded on a STOE Stadi P powder diffractometer obeying Bragg's law. This diffractometer comprises a 2.2 kW X-ray tube, a sample holder, a goniometer, and a MYTHEN1K detector. Nickel-filtered Cu K_{α1} radiation (1.54056 Å) is employed in all experiments. The profiles are chart recorded automatically using a scan speed of 0.7° per min in 2Θ. The resulting powder diffraction patterns are classified by mineral content using the Panalytical Highscore Plus software, based on reference patterns of the ICDD PDF-2 database.

Quantitative analysis of diffraction data refers to the determination of amounts of different phases in a multi-phase sample and has been performed using TOPAS-Academic V6. In detail, quantitative analysis allows to determine structural characteristics and phase proportions with quantifiable numerical precision from the experimental data itself. This involves modelling the full diffraction pattern using the Rietveld approach such that the calculated pattern(s) duplicates the experimental one.

### Particle Size Distribution (PSD)

The weight-based median particle size *d*₅₀(wt) and top cut *d*₉₈(wt) are measured by static light scattering (SLS). The central idea in laser diffraction is that a particle will scatter light at an angle determined by that particle's size. Larger particles will scatter at small angles and smaller particles scatter at wide angles. The measurement is made with a LA-950 Retsch of Horiba, Japan according to ISO 13320:2020. The method and the instrument are known to the skilled person and are commonly used to determine particle size distributions. The measurement is carried out in flow cell setup in an aqueous solution comprising 0.1 wt.-% of dry layered zeolite based on the total weight of the solution. The raw data obtained by the measurement is analysed using the Mie theory, with a particle refractive index and an absorption index as programmed in the LA-950 Retsch of Horiba, Japan. The methods and instruments are known to the skilled person and are commonly used to determine particle size distributions.

### Morphology and intergrowth

The morphology and the intergrowth of the layered zeolite are measured with Scanning electron microscope (SEM) and SEM images were recorded on a Zeiss 1530. The dry powder of the layered zeolite is spread on a carbon grid. Prior to measurement, the samples are coated with 2 nm platinum at a Cressington Sputter Coater 208HR (Cressington Scientific Instruments).

### Small angle X-ray scattering (SAXS)

Small angle X-ray scattering (SAXS) is used to determine the d-spacing of the concentrated layered zeolite dispersions in form of a gel and ensure the delamination. Due to delamination these d-spacings are > 100 Å. SAXS data are measured using a "Double Ganesha AIR" (SAXSLAB, Denmark). The X-ray source of this laboratory-based system is a rotating copper anode (MicroMax 007HF, Rigaku Corporation, Japan) providing a micro-focused beam. The data are recorded by a position sensitive detector (PILATUS 300K, Dectris). Samples of the treated layered zeolite are prepared by washing with a diluted aqueous solution of delamination agent (0.05 M) for 3 times and addition of a defined amount of ultrapure water. SAXS pattern are recorded after equilibration for one day in 1 mm glass capillaries. The circularly averaged data are normalized to incident beam, sample thickness, and measurement time.

### AFM measurements

Atomic Force Microscopy (AFM) is used for imaging of single layers of delaminated layered zeolites by a Dimension 3100 NanoScope IV unit equipped with OTESPA-R3 (Bruker) silicon tips in tapping mode. Samples are prepared by dropping a very dilute aqueous dispersion (5 mg/L) in Millipore water onto silicon wafers. The silicon wafers are cleaned with a snow jet, silylated with 3-(Ethoxydimethylsilyl)propylamine via gas-phase and rinsed with ultrapure water before application of the samples. The resulting images are analyzed with a NanoScope Analysis 1.8 software.

### Aspect ratio

The aspect ratio is defined as being the quotient of the platelet length of the layered zeolite and the height of the platelet of the layered zeolite. The aspect ratio is determined by concomitantly measuring the length and thickness of a statistically significant (> 50) number of delaminated zeolite platelets with AFM.

### Materials used in the Examples and Sample Preparation

### Synthesis of the Layered Zeolite.

The synthesis of the layered zeolite was performed according to the procedure published by Bergk, K.-H., Schwieger, W., Heyer, W., Porsch, M., 1985. "Verfahren zur Herstellung von Natriumoctosilikaten mit Schichtstruktur" and Borbely, G., Beyer, H.K., Karge, H.G., Schwieger, W., Brandt, A., Bergk, K.H., 1991. "Chemical Characterization, Structural Features, and Thermal Behavior of Sodium and Hydrogen Octosilicate", Clays Clay Miner. 39, 490-497.

99.85 g NaOH pellets (≥ 98 %, Sigma Aldrich) were dissolved in 131.95 g deionized water and then added to 1000 g colloidal SiO₂ (30 wt. %, Köstrosol 1030 KD) under vigorous stirring, giving a molar Na₂O:SiO₂:H₂O-ratio of 1:4:37. The suspension was aged for approximately one hour at room temperature. The layered zeolite was obtained after synthesis under hydrothermal conditions at 100°C for 4 weeks in a closed crucible. The obtained gel was washed with deionized water and finally dried at air to obtain a powder of layered zeolite.

### Preparation of Aqueous Solutions of the Delamination Agent

The delamination agent was chosen to fulfill the above-mentioned requirements. As delamination agent Meglumine (N-methyl-D-glucamine, >99.0 %, Aldrich) was used. For the preparation of the delamination agent in aqueous medium, Meglumine was dissolved in deionized, purified water, titrated to a pH of approximately 9 using HCI (32 wt. %) and dissolved with purified water to yield a 1 M solution.

### Treatment of the Layered Zeolite with the Delamination Agent in Aqueous Medium

500 mg of layered zeolite were suspended in 40 ml of a 1 M solution of the delamination agent in water, corresponding to 28-fold excess of the cation exchange capacity (theoretically 284 meq/100g). The treated layered zeolite was separated from the liquid by centrifuging (10000 g, 10 minutes) and the supernatant solution was discarded and replaced by fresh 1 M solution of the delamination agent. This treatment was repeated 5 times. The obtained treated layered zeolite was washed with purified water to reduce the ionic strength, allowing the delamination and a delaminated layered zeolite dispersion in form of a gel was obtained. Separation during the washing was performed by centrifugation (12000 g, 30 minutes).

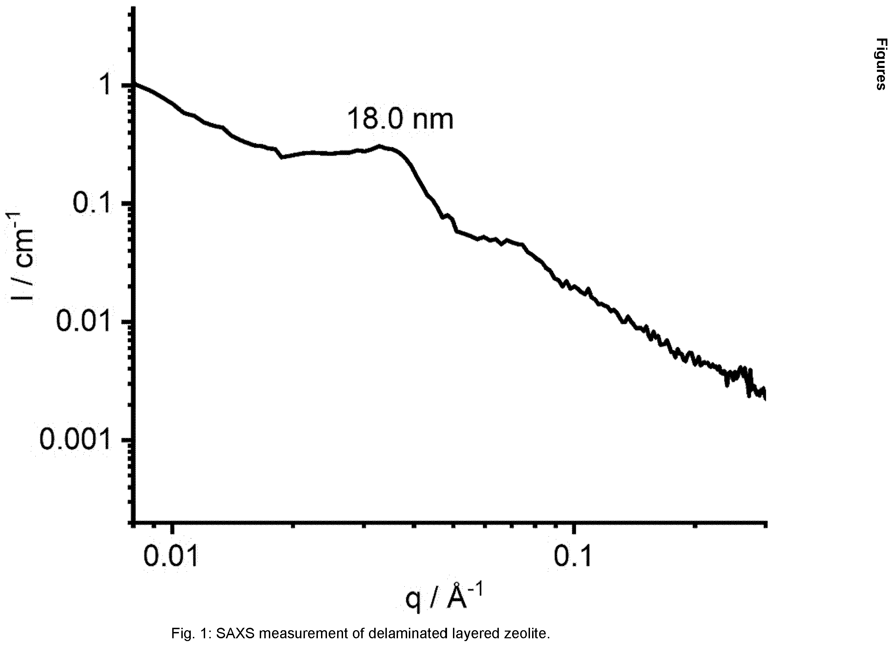

Delaminated zeolites form gels upon delamination in aqueous media and the d-spacing can be determined with SAXS as set out above. In figures 1 the obtained SAXS-pattern of the prepared delaminated layered zeolite dispersion is shown. It can be seen from figure 1 that the complete delamination of the layered zeolite is obtained by the inventive method. For a dispersion with a solid content of 3.47 wt. % in water of the delaminated layered zeolite in respect to the dried material, a d-spacing of 18.0 nm was observed.

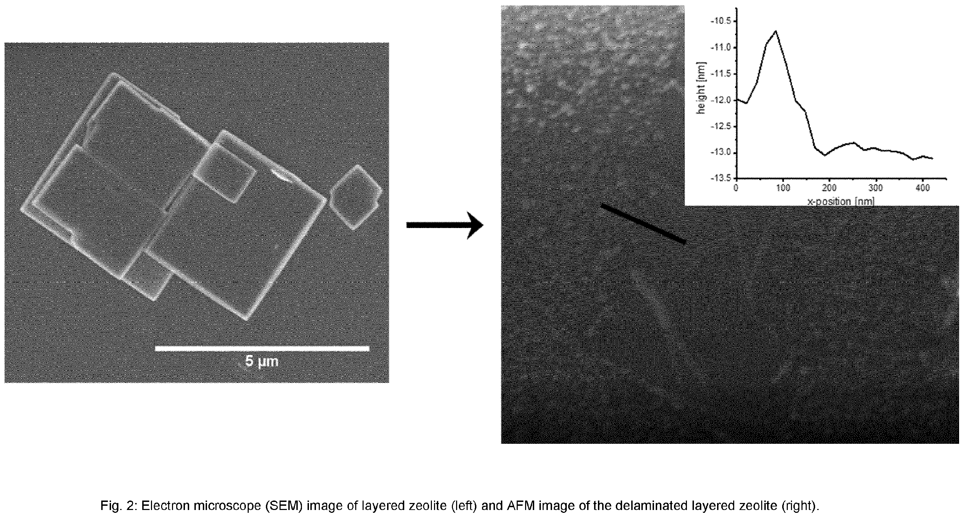

In Figure 2 on the left side a representative SEM image of the prepared layered zeolite particles prior to delamination is shown with a characteristic square-like morphology. As can be seen the prepared layered zeolite particles are non-intergrown. Upon delamination single layers of delaminated layered zeolite were received, as observed with AFM (Figure 2, right side).The aspect ratio of the delaminated layered zeolite was 4200. Therefore, it has been shown that by the inventive process it is possible to delaminate layered zeolite in an aqueous medium and to obtain a delaminated layered zeolite that has an aspect ratio of at least 200.

## Claims

1. A process for delamination of a layered zeolite in an aqueous medium, comprising the steps of
(a) providing a layered zeolite,
(b) providing a delamination agent, wherein the delamination agent is **characterized in that** it
(i) is a compound having exactly one positively charged atom, the positively charged atom being selected from the group consisting of nitrogen and phosphorous, and
(ii) contains nffunctional groups selected from the group consisting of hydroxyl groups, ether groups, sulfonic acid ester groups, carboxylic acid ester groups and mixtures thereof, n_{f} being a number from 3 to 10, and
(iii) comprises a total number of carbon atoms n_{c} being from 4 to 12, and
(iv) has a ratio of n_{c}/(1 +n_{f}) from 1 to 2, wherein n_{c} is the total number of carbon atoms of the delamination agent as defined under (iii) and n_{f} is the total number of functional groups in the delamination agent as defined under (ii), and
(v) contains nₜ atoms selected from the group consisting of carbon, nitrogen, phosphorous, oxygen, sulfur and mixtures thereof, nₜ being 9 to 40, and
(vii) has a pKₐ ≥ 7,
(c) contacting the layered zeolite with the delamination agent to obtain a treated layered zeolite, wherein the amount of the delamination agent is at least 60% of the cation exchange capacity of the layered zeolite,
(d) contacting the treated layered zeolite with an aqueous medium to obtain a delaminated layered zeolite dispersion, wherein the delaminated layered zeolite has an aspect ratio of at least 200.

2. The process according to claim 1, wherein the layered zeolite is represented by general formula (I)
(M₂O)ₙ(SiO₂)ₘ·(H₂O)ₓ
wherein
M are alkali metals,
n is from 0.5 to 10,
m is from 1 to 25, and
x is from 1 to 25.

3. The process according to claim 2, **characterized in that**
M is Li, Na or K and preferably Na,
n is from 1 to 5, preferably 1 to 3,
m is from 1 to 15, preferably 1 to 12, and
x is from 1 to 15, preferably from 1 to 12.

4. The process according to any of the preceding claims, wherein the layered zeolite is ilerite, magadiite, kanemite, makatite or kenyaite and preferably ilerite and/or
wherein the layered zeolite consists of individual crystals.

5. The process according to any one of claims 1 to 4, wherein the delamination agent
(i) is a compound having exactly one positively charged atom, the positively charged atom being selected from the group consisting of nitrogen atom in a protonated or quarternized amino group or a phosphorous atom in a phosphonium group and/or
(ii) contains nffunctional groups selected from the group consisting of hydroxyl groups, ether groups, sulfonic acid ester groups, carboxylic acid ester groups and mixtures thereof, n_{f} being a number from 3 to 8, and/or
(iii) comprises a total number of carbon atoms n_{c} being from 4 to 10, and/or
(iv) has a ratio of n_{c}/(1 +nf) from 1 to 1.8, wherein n_{c} is the total number of carbon atoms of the delamination agent as defined under (iii) and n_{f} is the total number of functional groups in the delamination agent as defined under (ii), and/or
(v) contains nₜ atoms selected from the group consisting of carbon, nitrogen, phosphorous, oxygen, sulfur and mixtures thereof, nₜ being 10 to 35.

6. The process according to any one of claims 1 to 5, wherein the delamination agent
(i) is a compound having exactly one positively charged nitrogen atom, and/or
(ii) contains n_{f} functional groups selected from the group consisting of hydroxyl groups, ether groups and mixtures thereof, n_{f} being a number from 3 to 6, and/or
(iii) comprises a total number of carbon atoms n_{c} being from 5 to 9, and/or
(iv) has a ratio of n_{c}/(1 +nf) from 1 to 1.5, wherein n_{c} is the total number of carbon atoms of the delamination agent as defined under (iii) and n_{f} is the total number of functional groups in the delamination agent as defined under (ii), and/or
(v) contains nₜ atoms selected from the group consisting of carbon, nitrogen, phosphorous, oxygen, sulfur and mixtures thereof, nₜ being 11 to 30, and/or
(vii) has a pKₐ ≥ 8.

7. The process according to any one of claims 1 to 6, wherein in step (c) the contacting of the layered zeolite with the delamination agent is done in an aqueous solution and preferably, the concentration of the delamination agent in the aqueous solution is from 0.02 to 2 mol/L, and even more preferably in the range of 0.03 to 1.5 mol/L.

8. The process according to any one of claims 1 to 7, wherein in step (c) the contacting of the layered zeolite with the delamination agent is done in an aqueous solution and preferably, the concentration of the layered zeolite in the aqueous solution is in the range from 0.1 to 100 g/L, preferably in the range from 1 to 50 g/L, more preferably in the range from 5 to 40 g/L and most preferably in the range from 10 to 30 g/L.

9. The process according to any one of claims 1 to 8, wherein in step (d) the aqueous medium after combination with the treated layered zeolite, has an ionic strength below 0.02 mol/L, preferably below 0.01 mol/L and most preferably below 0.005 mol/L.

10. The process according to any one of claims 1 to 9, wherein the aqueous medium in step (d) is water, preferably purified water.

11. A delaminated layered zeolite dispersion, comprising below 35 wt.-% of layered zeolite based on the total weight of the dispersion, wherein the delaminated layered zeolite has an aspect ratio of at least 200.

12. The delaminated layered zeolite dispersion according to claim 11, wherein the dispersion comprises from 0.001 to 30 wt.-% of layered zeolite based on the total weight of the dispersion, preferably from 0.01 to 25 wt.-% and most preferably from 0.1 to 20 wt.-%.

13. The delaminated layered zeolite dispersion according to claims 11 or 12, wherein the dispersion comprises delaminated layered zeolite comprising 1 to 10 layers, preferably 1 to 8 layers and most preferably 1 to 5 layers and/or
wherein the delaminated layered zeolite has an aspect ratio of at least 500, preferably at least 1000 more preferably at least 1500 and most preferably at least 2000.

14. A use of the delaminated layered zeolite dispersion as defined in claims 11 to 13 in the production of a composite material, a coating material, as a membrane material, or as a flameproof barrier or as a diffusion barrier and, preferably as a membrane material.

15. A composition selected from the group consisting of coating materials, composite materials and membrane materials, comprising the delaminated layered zeolite dispersion as defined in claims 11 to 13.
